# EUROPÄISCHE PATENTSCHRIFT

(11) **EP 0 666 046 B1**
(45) Veröffentlichungstag und Bekanntmachung des Hinweises auf die Patenterteilung: **08.03.2000**
(21) Anmeldenummer: 94119801.2
(22) Anmeldetag: 15.12.1994
(51) Int. Cl.: A47J 39/00, A47J 27/04

(54) **Verfahren und Vorrichtung zur Wärmebehandlung von Lebensmitteln**
Method and apparatus for heating food
Méthode et appareil pour réchauffer des aliments

(30) Priorität: 04.02.1994 DE 4403386
(43) Veröffentlichungstag der Anmeldung: 09.08.1995
(73) Patentinhaber: Wiesheu GmbH, 71563 Affalterbach (DE)
(72) Erfinder: Heerig, Hans, D-71409 Schwaikheim (DE); Braun, Martin, D-73760 Ostfildern (DE)
(74) Vertreter: Gahlert, Stefan, Dr.-Ing.

(56) Entgegenhaltungen:
- EP-A- 0 171 522
- EP-A- 0 582 238
- DE-A- 3 909 283
- DE-C- 2 731 191
- GB-A- 2 010 078
- US-A- 3 744 474
- US-A- 4 506 598

## Beschreibung

Die Erfindung betrifft eine Vorrichtung zur Wärmebehandlung von Lebensmitteln mit einem Behandlungsraum, mit einem Dampferzeuger, dessen Dampfleitung über ein Dampfventil mit dem Behandlungsraum zu dessen Beheizung verbunden ist, mit einem Gebläse zur Umwälzung des Fluides innerhalb des Behandlungsraums, mit einer Steuereinrichtung zur Steuerung der Dampfzufuhr in den Behandlungsraum über einen ersten Temperaturfühler, und mit einem Bodenauslauf, der mit einer Kondensatabflußleitung verbunden ist, wobei der erste Temperaturfühler zur Steuerung der Dampfzufuhr in einem Fühlerrohr vorgesehen ist, dessen erstes Ende mit der Kondensatabflußleitung verbunden ist.

Die Erfindung betrifft ferner ein Verfahren zur Wärmebehandlung von Lebensmitteln in einem Behandlungsraum, der durch Einleitung von Dampf in den Behandlungsraum beheizbar ist, wobei die Dampfzufuhr in Abhängigkeit vom Meßsignal eines Temperaturfühlers mittels einer Steuereinrichtung gesteuert wird, wobei das im Behandlungsraum vorhandene Fluid durch ein Gebläse umgewälzt wird, und wobei im Behandlungsraum anfallendes Kondensat über eine Kondensatabflußleitung abgeführt wird.

Eine derartige Vorrichtung und ein derartiges Verfahren sind aus der DE-U-8 032 133 bekannt.

Gemäß der bekannten Vorrichtung und dem bekannten Verfahren wird in einen Garraum, von einem Temperaturfühler gesteuert, Wasserdampf eingeführt und mittels eines Umluftgebläses zwangsumgewälzt. Der die Dampfzufuhr steuernde Temperaturfühler ist einem Fühlerrohr angeordnet, das einerseits aus dem Garraum oberhalb des Umluftgebläses abzweigt und andererseits in ein mit dem Kondensatablaufrohr verbundenes Abluftrohr mündet.

Hierdurch soll eine störungsfreie Steuerung der Dampfzufuhr erreicht werden, da ein Einfluß einer Verschmutzung des Kondensatsablaufrohres auf die Regelung der Dampfzufuhr ausgeschaltet wird.

Auf diese Weise wird zwar ein Einfluß einer Verschmutzung des Kondensatablaufrohrs auf die Steuerung der Dampfzufuhr vermieden, jedoch ist auch hierbei der Dampfverbrauch hoch und eine präzise Einhaltung einer vorgegebenen Temperatur bzw. eines vorgegebenen Garzustandes eines behandelten Lebensmittels nicht erreichbar.

Eine weitere Vorrichtung und ein weiteres Verfahren ähnlicher Art sind aus der EP-A-0 171 522 bekannt. Auch hierbei ist ein Temperaturfühler zur Steuerung der Dampfzufuhr in einen Garraum in einem Fühlerrohr vorgesehen, das an einem Ende mit der Kondensatabflußleitung verbunden sein kann. Das andere Ende des Fühlerrohrs endet hierbei jedoch im oberen Bereich des Garraums an einer von dem Gebläse entfernten Wand. Die Anordnung ist hierbei so getroffen, daß der Temperaturfühler dann anspricht, wenn infolge eines großen Dampfüberschusses im Garraum Dampf aus dem Garraum in das Fühlerrohr einströmt.

Die bekannte Vorrichtung und das bekannte Verfahren weisen den Nachteil auf, daß eine feinfühlige Regelung des Dampfüberschusses nur schwer möglich ist und daß somit ein relativ hoher Energie- und Wasserverbrauch die Folge ist.

Bei einer aus der US-A-3 744 474 bekannten Vorrichtung ist eine Behandlungskammer vorgesehen, die einen Einlaß zur Zuführung von Dampf und einen Bodenauslauf aufweist, der mit einer Kondensatabflußleitung verbunden ist. In die Behandlungskammer eingebrachte Lebensmittel können durch in die Behandlungskammer eingeführten Dampf schnell aufgeheizt bzw. gegart werden, da der Dampf an den kälteren Lebensmitteln kondensiert und so eine schnelle Wärmeübertragung und Aufheizung ermöglicht. Innerhalb des Behandlungsraumes ist ein Gebläse vorgesehen, um das aus Dampf und Luft bestehende Fluidgemisch umzuwälzen. Die Dampfzufuhr aus dem Dampferzeuger in den Behandlungsraum wird bei der bekannten Vorrichtung über einen Temperatursensor gesteuert, der im Kondensatabfluß vorgesehen ist.

Die bekannte Vorrichtung und das bekannte Verfahren haben den Nachteil, daß eine genaue Steuerung der Dampfzufuhr nur schwer möglich ist, da der im Kondensatabfluß vorgesehene Temperaturfühler im wesentlichen erst dann Temperaturveränderungen wahrnimmt, wenn infolge eines Überdruckes in der Behandlungskammer Dampf über den Kondensatabfluß austritt. Dies führt zu einem ausgesprochen schlechten Regelverhalten der Anordnung und im Ergebnis dazu, daß wesentlich mehr Dampf erzeugt wird und über den Kondensatabfluß abgeführt wird, als tatsächlich zur Beheizung der im Behandlungsraum vorhandenen Lebensmittel erforderlich ist. Dadurch ergibt sich ein erheblicher Energieverbrauch und zusätzlich ein großer Wasserverbrauch.

Eine ähnliche Vorrichtung zur Wärmebehandlung von Lebensmitteln ist durch die GB-A-20 10 078 bekannt geworden.

Bei der bekannten Vorrichtung ist der Behandlungsraum durch eine Trennwand in einen Garraum und in einen Heizraum unterteilt, wobei im letzteren ein Gebläse zur Umwälzung des Fluides und eine Heizung angeordnet sind. Der Dampf wird in einem Dampferzeuger erzeugt und tritt von diesem aus in die Heizkammer über, von wo er mittels des Gebläses umgewälzt wird, um im Garraum vorhandene Lebensmittel aufzuheizen bzw. zu garen. Dabei wird die Heizung des Dampferzeugers über einen Temperatursensor gesteuert, der in einer an den Bodenablauf angeschlossenen Kondensatabflußleitung vorgesehen ist. Alternativ oder zusätzlich kann ein Drucksensor im Dampferzeuger zur Steuerung der Heizung vorgesehen sein.

Mit der vorbekannten Anordnung läßt sich zwar ein konstanter Dampfdruck bzw. eine vorgegebene Dampftemperatur im Dampferzeuger einhalten, jedoch läßt sich auch auf diese Weise nur eine ungenaue Regelung der Heizleistung erreichen, da der Dampf unmittelbar aus dem Dampferzeuger in den Heizraum übertritt und eine Steuerung der Wärmezufuhr lediglich über die erzeugte Dampfmenge und zusätzlich über die Steuerung des Gebläses in Abhängigkeit von der Temperatur innerhalb des Garraumes erreicht wird.

Auch auf diese Weise ist immer ein erheblicher Dampfüberschuß erforderlich, was zu einem hohen Energie- und Wasserverbrauch führt und die genaue Einhaltung eines vorgegebenen Garzustandes der behandelten Lebensmittel nicht ermöglicht.

Eine Vorrichtung ähnlicher Art ist aus der DE-B-27 31 191 bekannt.

Der Erfindung liegt die Aufgabe zugrunde, eine Vorrichtung und ein Verfahren zur Wärmebehandlung von Lebensmitteln zu schaffen, wodurch die Nachteile des Standes der Technik vermieden werden und insbesondere der Energieverbrauch und der Wasserverbrauch gegenüber herkömmlichen Anordnungen reduziert wird. Desweiteren sollen eine vorgegebene Temperatur bzw. ein vorgegebener Garzustand eines behandelten Lebensmittels möglichst präzise eingehalten werden können.

Diese Aufgabe wird erfindungsgemäß dadurch gelöst, daß bei einer Vorrichtung der eingangs genannten Art der erste Temperaturfühler zur Steuerung der Dampfzufuhr in einem Fühlerrohr vorgesehen ist, dessen erstes Ende mit der Kondensatabflußleitung verbunden ist und dessen zweites Ende im Bereich der Saugseite des Gebläses mündet.

Die Aufgabe der Erfindung wird auf diese Weise vollkommen gelöst.

Durch die spezielle Anordnung des Temperaturfühlers zur Steuerung der Dampfzufuhr in den Behandlungsraum erfaßt der Temperaturfühler im wesentlichen die Temperatur im Behandlungsraum in der Nähe der Saugseite des Gebläses. Sollte jedoch infolge eines Dampfüberschusses im Behandlungsraum Dampf über den Bodenauslauf in die Kondensatabflußleitung austreten, so führt dies auch zu einer Temperaturerhöhung im Fühlerrohr, die von dem Temperaturfühler erfaßt wird, so daß die Dampfzufuhr in den Behandlungsraum gedrosselt wird. Durch die spezielle Anordnung des Temperaturfühlers reagiert dieser sowohl auf eine Temperaturerhöhung im Behandlungsraum als auch auf eine Temperaturerhöhung im Kondensatablauf infolge austretenden Dampfes. Insgesamt wird auf diese Weise eine erheblich bessere Regelung der Dampfzufuhr in den Behandlungshauptraum erreicht, so daß eine präzise Einhaltung einer vorgegebenen Temperatur eines zu behandelnden Lebensmittels erreicht werden kann bzw. ein vorgegebener Garzustand eines Lebensmittels äußerst genau erreicht werden kann. Infolge der durch die besondere Anordnung des Temperaturfühlers bedingten geringen Trägheit der Regelung ist es möglich, mit nur geringem Dampfüberschuß im Behandlungsraum zu arbeiten, so daß der Dampfverbrauch erheblich reduziert wird und damit der Energieverbrauch der Vorrichtung gesenkt wird und gleichzeitig der Wasserverbrauch erheblich reduziert wird. Dies ist besonders vorteilhaft infolge der reduzierten Umweltbelastung.

Dadurch, daß das erste Ende des Fühlerrohrs derart anzuordnet ist, daß im Fühlerrohr ein Druckgefälle von der Kondensatabflußleitung zur Saugseite des Gebläses hin besteht, kann je nach Anordnung des ersten Endes des Fühlerrohrs eine ständige Fluidströmung im Fühlerrohr von der Kondensatabflußleitung zum Gebläse hin erreicht werden, die stärker ausgeprägt sein kann oder nur eine kaum merkliche Strömung darstellt. Dadurch kann in Kombination mit der Anordnung des Temperaturfühlers innerhalb des Fluidrohres entweder in unmittelbarer Nähe des Kondensatabflußrohres oder im Bereich des zweiten Endes des Fühlerrohrs entweder eine überwiegende Erfassung der Temperatur im Behandlungsraum oder aber eine stärkere Erfassung der Temperatur im Kondensatablauf erreicht werden. Bei einem stärkeren Druckgefälle im Fühlerrohr kann der Temperaturfühler mehr in der Nähe des Kondensatablaufs angeordnet werden, da infolge der stärkeren Luftströmung ein ständiger Austausch stattfindet, so daß trotz der Anordnung in der Nähe des Kondensatabflußrohres der Temperaturfühler auch praktisch verzögerungslos auf Temperaturveränderungen im Behandlungsraum reagiert. Wird dagegen durch die Anordnung des zweiten Endes des Fühlerrohrs in größerer Entfernung von der Saugseite des Gebläses ein geringeres Druckgefälle im Fühlerrohr erzielt, so ist es vorteilhaft, den Temperaturfühler mehr im Bereich des zweiten Endes des Fühlerrohrs anzuordnen, um eine genauere Erfassung der Temperatur im Behandlungsraum zu gewährleisten.

In vorteilhafter Weiterbildung der Erfindung ist vorgesehen, den Behandlungsraum durch eine Trennwand unter Bildung zumindest einer Durchlaßöffnung in einen Garraum und einen Heizraum zu trennen, der mit der Dampfleitung verbindbar ist, und das Gebläse so anzuordnen, daß die Saugseite des Gebläses in den Garraum und die Druckseite des Gebläses in den Heizraum mündet.

Auf diese Weise wird ein weitgehend von Installationen freier Garraum zur Aufnahme der Lebensmittel zur Verfügung gestellt, und die übrigen Installationen, wie das Gebläse, eine Zusatzheizung und dgl. mehr sind räumlich getrennt vom Garraum angeordnet. So wird insgesamt die Aufnahmekapazität für Lebensmittel vergrößert, und der Garraum kann auf einfache Weise gereinigt werden. Da die Dampfleitung zunächst in den Heizraum mündet, kann eine zusätzliche Steuerung der Energiezufuhr in den Garraum durch eine Steuerung des Gebläses erreicht werden.

Hierzu kann in vorteilhafter Weiterbildung der Erfindung das Gebläse mittels eines im Garraum angeordneten zweiten Temperaturfühlers steuerbar ausgebildet sein.

Zusätzlich kann im Heizraum eine Heizeinrichtung vorgesehen sein, die über den ersten Temperaturfühler oder über einen zweiten, im Garraum angeordneten Temperaturfühler steuerbar ist.

In weiterer Ausgestaltung der Erfindung ist vorgesehen, daß die Dampfleitung über ein Dampfventil in den Behandlungsraum mündet, das mit der Steuereinrichtung zur Steuerung der Dampfzufuhr gekoppelt ist.

Auf diese Weise wird eine besonders schnelle Anpassung der Dampfzufuhr bei Temperaturveränderungen ermöglicht, die vom ersten Temperaturfühler erfaßt werden. Ein solcher Fall kann beispielsweise dann auftreten, wenn zunächst tiefgefrorene Lebensmittel aufgetaut und dann gegart werden. Während des Auftauvorganges ergibt sich nur ein relativ geringer Temperaturanstieg an der Oberfläche der Lebensmittel, so daß eine relativ große Dampfmenge benötigt wird. Ist dagegen der Auftauvorgang beendet, so steigt die Temperatur des Lebensmittels schnell an, und die Dampfzufuhr muß kurzfristig reduziert werden. Es ist daher vorteilhaft, im Dampferzeuger stets eine ausreichende Dampfmenge zur Verfügung zu haben, und die Dampfzufuhr selbst in den Behandlungs- bzw. Garraum über Öffnen bzw. Schließen eines Dampfventils zu steuern.

Der Dampferzeuger selbst kann über einen eigenen Temperaturfühler oder auch über einen Druckregler gesteuert sein. In vorteilhafter Weiterbildung der Erfindung kann der Dampferzeuger auch eine über den ersten Temperaturfühler gesteuerte Heizeinrichtung aufweisen.

In weiter vorteilhafter Ausgestaltung der Erfindung ist die Kondensatabflußleitung durch einen Wärmetauscher geführt, der eingangsseitig mit einer Frischwasserleitung verbunden ist und ausgangsseitig mit dem Dampferzeuger verbunden ist.

Diese Maßnahme hat den Vorteil, daß über die Kondensatabflußleitung noch austretender Dampf im Wärmetauscher kondensiert wird und gleichzeitig das über die Frischwasserleitung zugeführte Wasser im Wärmetauscher vorgewärmt wird, so daß der Energiebedarf des Dampferzeugers reduziert wird.

Bei dieser Ausführung kann in weiter vorteilhafter Ausgestaltung der Erfindung zur Steuerung der Frischwasserzufuhr in den Dampferzeuger ein Ventil in der Frischwasserleitung vorgesehen sein.

Auf diese Weise kann die Frischwasserzufuhr in den Dampferzeuger automatisch der Dampfentnahme angepaßt werden, wobei zur Steuerung des Ventils beispielsweise ein Niveaumelder im Dampferzeuger vorgesehen sein kann.

Die Aufgabe der Erfindung wird ferner durch ein Verfahren zur Wärmebehandlung von Lebensmitteln in einem Behandlungsraum gelöst, der durch Einleitung von Dampf in den Behandlungsraum beheizbar ist, wobei die Dampfzufuhr in Abhängigkeit vom Meßsignal eines Temperaturfühlers mittels einer Steuereinrichtung gesteuert wird, wobei das im Behandlungsraum vorhandene Fluid durch ein Gebläse umgewälzt wird, und wobei im Behandlungsraum anfallendes Kondensat über eine Kondensatabflußleitung abgeführt wird, und wobei der Temperaturfühler in einem Fühlerrohr derart angeordnet ist, daß im Fühlerrohr eine Fluidströmung von der Kondensatabflußleitung zum Behandlungsraum hin erzeugt wird.

Infolge der ständig im Fühlerrohr herrschenden Fluidströmung reagiert der Temperaturfühler praktisch ohne Zeitverzögerung sowohl auf Temperaturveränderungen im Behandlungsraum als auch auf Temperaturveränderungen in der Kondensatabflußleitung infolge austretenden Dampfes.

Auf diese Weise wird eine präzise Steuerung der Dampfzufuhr in den Behandlungsraum ermöglicht, so daß mit einem sehr geringen Dampfüberschuß gearbeitet werden kann, um den Energiebedarf und den Wasserverbrauch stark zu reduzieren.

Es hat sich gezeigt, daß dann, wenn verschiedenartige Lebensmittel gleichzeitig in der Vorrichtung einer Wärmebehandlung unterzogen werden sollen, die Gefahr einer gewissen Geschmacksübertragung vom einen Lebensmittel auf das andere Lebensmittel besteht. In solchen Fällen ist es vorteilhaft, mit einem etwas größeren Dampfüberschuß zu arbeiten, da bei einer größeren Menge von zugeführtem Sattdampf dieser an den Lebensmitteln kondensiert und so ein Austreten von Aromastoffen aus einem Lebensmittel und eine Übertragung auf das andere Lebensmittel praktisch unterbunden wird.

Da nach dem erfindungsgemäßen Verfahren die Steuerung der Dampfzufuhr ausgesprochen präzise ist, kann der erforderliche Dampfüberschuß genau eingestellt werden, so daß trotz eines größeren Dampfverbrauches nur mit dem unbedingt notwendigen Dampfüberschuß gearbeitet wird, so daß der Dampfverbrauch nur unwesentlich steigt und insbesondere über einen nachgeschalteten Wärmetauscher eine vollständige Kondensation des über die Kondensatabflußleitung austretenden überschüssigen Dampfes erreicht wird, so daß ein Austreten von Wrasen an die Umgebung verhindert wird.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

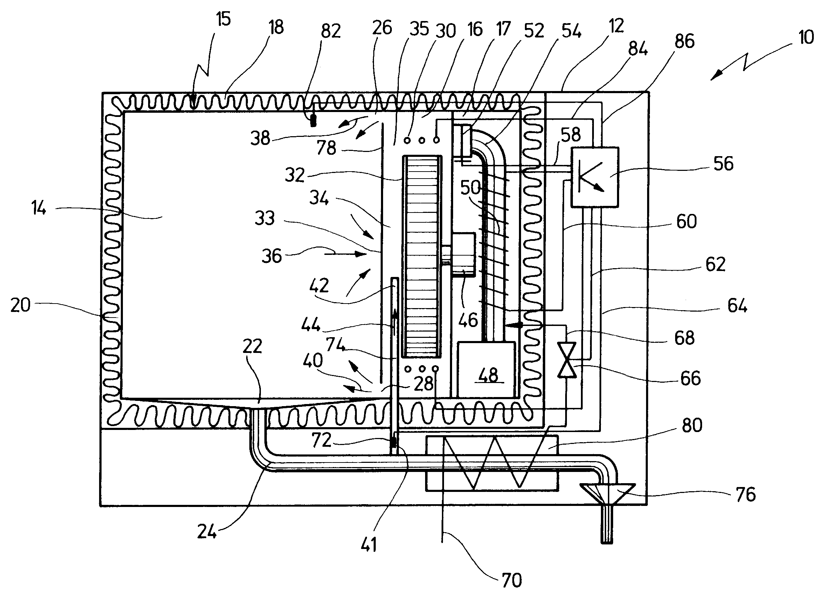

Weitere Merkmale und Vorteile der Erfindung ergeben sich aus der nachfolgenden Beschreibung eines bevorzugten Ausführungsbeispieles unter Bezugnahme auf die Zeichnung.

Die einzige Figur zeigt eine erfindungsgemäße Vorrichtung im Längsschnitt in schematischer Darstellung.

Eine erfindungsgemäße Vorrichtung ist in der Figur insgesamt mit der Ziffer 10 bezeichnet. Die Vorrichtung 10 weist ein Gehäuse 12 auf, innerhalb dessen ein Behandlungsraum 15 vorgesehen ist, der von einer Wärmeisolierung 18 umgeben ist.

Die Vorrichtung 10 ist als sogenannter Kombi-Dämpfer ausgebildet, d.h. geeignet, um Lebensmittel mittels Dampfzufuhr aufzuheizen bzw. aufzutauen und zu garen und um eine bestimmte Temperatur einzuhalten. Zu diesem Zweck bestehen die Wände des Behandlungsraumes 15 vorzugsweise aus Edelstahlblech. Der Behandlungsraum 15 weist an seinem vorderen, linken Ende eine Tür auf (nicht dargestellt). Durch eine an seinem hinteren Ende parallel zur Fronttür angeordnete Trennwand 78 ist der Behandlungsraum 15 in einen vorderen Garraum 14 und in einen hinteren Heizraum 16 unterteilt. Die Trennwand 78 ist derart angeordnet, daß zwischen dem Rand der Trennwand 78 und der Wandung des Behandlungsraumes 15 vollständig umlaufende Durchlaßöffnungen 26, 28 verbleiben. Innerhalb des Heizraums 16 ist ein Gebläse 32 vorgesehen, das als Radialgebläse ausgebildet ist, das mit seiner Saugseite 34 über einen konischen Ansaugstutzen 33 aus dem Garraum 14 ansaugt, wie durch die Pfeile 36 dargestellt ist, und dessen Druckseite 35 das Luft/Dampfgemisch über die Durchlaßöffnungen 26, 28 wieder in den Garraum 14 einströmen läßt, wie durch die Pfeile 38, 40 angedeutet ist.

Das Gebläse 32 ist von einer Heizung 30 umgeben, deren Heizschlangen konzentrisch um das Gebläse 32 angeordnet sind und über Heizleitungen 84 von einer elektronischen Steuereinrichtung 56 mit Strom beaufschlagt werden. Das Gebläse 32 ist von einem Motor 46 angetrieben, der in einem Installationsraum 17 hinter dem Heizraum 16 angeordnet ist. Im Installationsraum 17 ist ferner ein Dampferzeuger 48 vorgesehen, dessen Dampfleitung 54 über ein Dampfventil 52 in den Heizraum 16 mündet.

Zur Beheizung des Dampferzeugers 48 ist eine Heizung 50 vorgesehen, die gleichfalls über die elektronische Steuereinrichtung 56 gesteuert wird.

Der Boden des Garraums 14 ist trichterförmig mit einem sehr flachen Neigungswinkel ausgebildet und weist einen Bodenauslauf 22 auf, an den eine Kondensatabflußleitung 24 angeschlossen ist, die durch einen Wärmetauscher 80 geführt ist und schließlich in einem Kondensatablauf 76 mündet, über den Kondensat nach außen aus dem Gehäuse 12 abgeführt werden kann.

Durch den Wärmetauscher 80 ist eine Frischwasserleitung 70 geführt, nach deren Austritt aus dem Wärmetauscher 80 sich ein Ventil 66 anschließt, das über eine Leitung 68 mit dem Dampferzeuger 48 verbunden ist, um diesem durch den Wärmetauscher 80 vorgewärmtes Frischwasser zuzuführen.

Die Steuerung der Frischwasserzufuhr erfolgt über ein Ventil 66, das von der elektronischen Steuereinrichtung 56 z.B. in Abhängigkeit vom Flüssigkeitspegel innerhalb des Dampferzeugers 48 gesteuert sein kann.

Zwischen dem Ansaugstutzen 33 des Gebläses 32 und der Kondensatabflußleitung 24 ist ein Fühlerrohr 74 vorgesehen, dessen erstes Ende 41 in die Kondensatabflußleitung 24 mündet und dessen zweites Ende 42 im Ansaugstutzen 33 an der Saugseite 34 des Gebläses 32 mündet. Infolge des vom Gebläse 32 erzeugten Unterdruckes im Ansaugstutzen 33 ergibt sich eine Ansaugströmung aus dem Garraum 14 in den Ansaugstutzen 33, die durch die Pfeile 36 angedeutet ist. Gleichfalls entsteht durch den Unterdruck an der Saugseite 34 des Gebläses 32 ein Druckgefälle vom ersten Ende 41 des Fühlerrohrs 74 zum zweiten Ende 42 hin. Dadurch ergibt sich eine Strömung in Richtung des Ansaugstutzens 33, wie durch den Pfeil 44 angedeutet ist.

Im Bereich des ersten Endes 41 des Fühlerrohrs 74 ist oberhalb des Kondensatabflußleitung 24 ein erster Temperaturfühler 72 vorgesehen, der als NiCrNi-Thermoelement ausgebildet sein kann.

Im Bereich der oberen Wandung des Garraums 14 ist ferner ein zweiter Temperaturfühler 82 vorgesehen, über den die im Heizraum 16 vorgesehene Heizung 30 in Abhängigkeit von der Temperatur im Garraum über die elektronische Steuereinrichtung 56 gesteuert werden kann.

Infolge der besonderen Anordnung des ersten Temperaturfühlers 72 innerhalb des Fühlerrohrs 74 reagiert das erste Thermoelement 72 sowohl auf Temperaturveränderungen innerhalb des Garraums 14 als auch auf Temperaturveränderungen innerhalb der Kondensatabflußleitung 24 infolge austretenden Dampfes bei Dampfüberschuß im Garraum 14. In Abhängigkeit von dem Meßsignal des ersten Temperaturfühlers 72 wird das Dampfventil 52 über die Steuereinrichtung 56 gesteuert, so daß die Dampfzufuhr in den Heizraum 16 und damit in den Garraum 14 präzise gesteuert werden kann, um eine vorgegebene Temperatur innerhalb des Garraums einzuhalten bzw. um einen vorgegebenen Garzustand eines Lebensmittels zu erreichen. Dabei ist ein ausgesprochen schnelles Ansprechen der Regelung auf Temperaturveränderungen sowohl im Garraum 14 als auch in der Kondensatabflußleitung 24 infolge austretenden Dampfes gewährleistet.

Die Heizung 50 des Dampferzeugers 48 wird dabei vorzugsweise derart gesteuert, daß immer eine ausreichende Dampfmenge zur Verfügung steht. Dies kann über einen Temperaturfühler oder einen Drucksensor im Dampferzeuger 48 erfolgen. Gleichfalls wird die Wasserzufuhr in den Dampferzeuger 48 über das Ventil 66 und die Leitung 68 derart gesteuert, daß immer eine ausreichende Wassermenge im Dampferzeuger 48 vorhanden ist.

Als Zusatzheizung dient die Heizung 30, die im Heizraum 16 vorgesehen ist. Die Heizung 30 kann entweder gleichfalls in Abhängigkeit von dem ersten Temperaturfühler 72 oder aber auch in Abhängigkeit von dem zweiten Temperaturfühler 82 im Garraum 14 gesteuert werden. Zusätzlich kann das Gebläse 32 ein- bzw. ausgeschaltet werden, was beispielsweise über den zweiten Temperaturfühler 82 im Garraum 14 mittels der Steuereinrichtung 56 bewirkt werden kann.

Die Steuerung der Dampfzufuhr 52, der Heizung 30 und ggf. des Gebläses 32 im Heizraum 16 kann mittels der Steuereinrichtung 56 derart eingestellt sein, daß mit einem möglichst geringen Dampfüberschuß im Garraum 14 gearbeitet wird, um so den Dampfverbrauch und damit den Energieverbrauch auf ein Mindestmaß zu reduzieren und gleichzeitig den Wasserverbrauch zu senken.

Sofern verschiedenartige Lebensmittel im Garraum 14 gleichzeitig aufgetaut, erwärmt oder gegart werden sollen, so muß verhindert werden, daß Aromastoffe von dem einen Lebensmittel auf das andere Lebensmittel übertreten. Hierzu muß mit einem höheren Dampfüberschuß gearbeitet werden, da die Erwärmung dann praktisch ausschließlich durch an den Lebensmitteln kondensierenden Dampf erfolgt, wodurch eine Übertragung von Feuchtigkeit aus dem einen Lebensmittel auf ein anderes Lebensmittel und damit eine Übertragung von Aromastoffen praktisch ausgeschlossen wird.

Infolge der präzisen Steuerung der Dampfzufuhr über das Dampfventil 52 in Abhängigkeit von dem durch den ersten Temperaturfühler 72 aufgenommenen Meßsignal kann der notwendige Dampfüberschuß jedoch auf ein Mindestmaß reduziert werden, so daß auch bei einem absichtlich erzeugten Dampfüberschuß im Vergleich zu herkömmlichen Anordnungen noch ein geringerer Dampfverbrauch besteht und gleichzeitig eine praktisch vollständige Kondensation des über die Kondensatabflußleitung 24 austretenden Dampfes im Wärmetauscher 80 erreicht wird, so daß ein Austreten von Wrasen an die Umgebung verhindert wird und der Dampfverbrauch und damit der Energieverbrauch auf das notwendige Mindestmaß begrenzt wird.

## Patentansprüche

1. Vorrichtung zur Wärmebehandlung von Lebensmitteln mit einem Behandlungsraum (15), mit einem Dampferzeuger (48), dessen Dampfleitung (54) über ein Dampfventil (52) mit dem Behandlungsraum (15) zu dessen Beheizung verbunden ist, mit einem Gebläse (32) zur Umwälzung des Fluides innerhalb des Behandlungsraums (15), mit einer Steuereinrichtung (56) zur Steuerung der Dampfzufuhr in den Behandlungsraum (15) über einen ersten Temperaturfühler (72), und mit einem Bodenauslauf (22), der mit einer Kondensatabflußleitung (24) verbunden ist, wobei der erste Temperaturfühler (72) zur Steuerung der Dampfzufuhr in einem Fühlerrohr (74) vorgesehen ist, dessen erstes Ende (41) mit der Kondensatabflußleitung (24) verbunden ist, dadurch gekennzeichnet, daß das zweite Ende des Fühlerrohrs (74) im Bereich eines Ansaugstutzens (33) des Gebläses (32) an seiner Saugseite (34) mündet, und daß das erste Ende (41) des Fühlerrohrs (74) derart angeordnet ist, daß im Fühlerrohr (74) ein Druckgefälle von der Kondensatabflußleitung (24) zum Ansaugstutzen (33) des Gebläses (32) hin besteht.

2. Vorrichtung nach Anspruch 1, dadurch gekennzeichnet, daß der Behandlungsraum (15) durch eine Trennwand (78) unter Bildung zumindest einer Durchlaßöffnung (26, 28) in einen Garraum (14) und einen Heizraum (16) getrennt ist, der mit der Dampfleitung (54) verbindbar ist, daß die Saugseite (34) des Gebläses (32) in den Garraum (14) und die Druckseite (35) des Gebläses (32) in den Heizraum (16) mündet.

3. Vorrichtung nach einem oder mehreren der vorhergehenden Ansprüche, dadurch gekennzeichnet, daß die Dampfleitung (54) über ein Dampfventil (52) in den Behandlungsraum (15) mündet, das mit der Steuereinrichtung (56) zur Steuerung der Dampfzufuhr gekoppelt ist.

4. Vorrichtung nach einem oder mehreren der vorhergehenden Ansprüche, dadurch gekennzeichnet, daß die Kondensatabflußleitung (24) durch einen Wärmetauscher (80) geführt ist, der eingangsseitig mit einer Frischwasserleitung (70) verbunden ist und ausgangsseitig mit dem Dampferzeuger (48) verbunden ist.

5. Vorrichtung nach Anspruch 4, dadurch gekennzeichnet, daß zur Steuerung der Frischwasserzufuhr in den Dampferzeuger (48) ein Ventil (66) in der Frischwasserleitung (70) vorgesehen ist.

6. Vorrichtung nach einem oder mehreren der vorhergehenden Ansprüche, dadurch gekennzeichnet, daß der Dampferzeuger (48) eine über den ersten Temperaturfühler (72) gesteuerte Heizeinrichtung (50) aufweist.

7. Vorrichtung nach einem oder mehreren der vorhergehenden Ansprüche, dadurch gekennzeichnet, daß im Heizraum (16) eine Heizeinrichtung (30) vorgesehen ist, die über den ersten Temperaturfühler (72) oder über einen zweiten, im Garraum angeordneten Temperaturfühler (82) steuerbar ist.

8. Vorrichtung nach einem oder mehreren der Ansprüche 2 bis 7, dadurch gekennzeichnet, daß das Gebläse (32) über die Steuereinrichtung (56) mittels eines im Garraum (14) angeordneten zweiten Temperaturfühlers (82) steuerbar ist.

9. Verfahren zur Wärmebehandlung von Lebensmitteln in einem Behandlungsraum (15), der durch Einleitung von Dampf in den Behandlungsraum (15) beheizbar ist, wobei die Dampfzufuhr in Abhängigkeit vom Meßsignal eines Temperaturfühlers (72) mittels einer Steuereinrichtung (56) gesteuert wird, wobei das im Behandlungsraum (15) vorhandene Fluid durch ein Gebläse (32) umgewälzt wird, wobei im Behandlungsraum (15) anfallendes Kondensat über eine Kondensatabflußleitung (24) abgeführt wird und wobei der Temperaturfühler (72) zur Steuerung der Dampfzufuhr in einem Fühlerrohr (74) vorgesehen ist dessen erstes Ende (41) mit der Kondensatablaufsleitung (24) verbunden ist, dadurch gekennzeichnet, dass ein zweites Ende des Fühlerrohr (74) im Bereich eines Ansaugstutzens (33) des Gebläses (32) an dessen Saugseite (34) derart angeordnet wird, daß im Fühlerrohr (74) eine Fluidströmung von der Kondensatabflußleitung (24) zum Behandlungsraum (15) hin erzeugt wird.

10. Verfahren nach Anspruch 9, dadurch gekennzeichnet, daß die Dampfzufuhr in den Behandlungsraum (15) derart gesteuert wird, daß eine überschüssige Dampfmenge in den Behandlungsraum (15) eingeleitet wird, so daß Dampf über die Kondensatabflußleitung (24) aus dem Behandlungsraum (15) austritt, der durch einen nachgeschalteten Wärmetauscher (80) weitgehend kondensiert wird.

## Claims

1. Device for the heat treatment of foods with a treatment chamber (15), with a steam generator (48), the steam line (54) of which is connected via a steam valve (52) to the treatment chamber (15) for the heating thereof, with a fan (32) for circulating the fluid inside the treatment chamber (15), with a control device (56) for controlling the supply of steam into the treatment chamber (15) via a first temperature sensor (72), and with a bottom outlet (22) which is connected to a condensate discharge line (24), the first temperature sensor (72) being provided, to control the supply of steam, in a sensor pipe (74), the first end (41) of which is connected to the condensate discharge line (24), characterized in that the second end of the sensor pipe (74) opens in the region of an intake (33) of the fan (32) on the suction side thereof (34), and in that the first end (41) of the sensor pipe (74) is arranged in such a way that in the sensor pipe (74) a pressure drop exists from the condensate discharge line (24) towards the intake (33) of the fan (32).

2. Device according to Claim 1, characterized in that the treatment chamber (15) is separated by means of a partition (78), with formation of at least one passage opening (26, 28), into a cooking chamber (14) and a heating chamber (16), which can be connected to the steam line (54), in that the suction side (34) of the fan (32) opens into the cooking chamber (14) and the pressure side (35) of the fan (32) into the heating chamber (16).

3. Device according to one or more of the preceding Claims, characterized in that the steam line (54) opens via a steam valve (52) into the treatment chamber (15), which valve is coupled to the control device (56) to control the supply of steam.

4. Device according to one or more of the preceding Claims, characterized in that the condensate discharge line (24) is guided through a heat exchanger (80) which is connected to a fresh water line (70) on the inlet side and to the steam generator (48) on the outlet side.

5. Device according to Claim 4, characterized in that a valve (66) is provided in the fresh water line (70) to control the fresh water supply into the steam generator (48).

6. Device according to one or more of the preceding Claims, characterized in that the steam generator (48) has a heating device (50) controlled via the first temperature sensor (72).

7. Device according to one or more of the preceding Claims, characterized in that a heating device (30), which is controllable via the first temperature sensor (72) or via a second temperature sensor (82) arranged in the cooking chamber, is provided in the heating chamber (16).

8. Device according to one or more of Claims 2 to 7, characterized in that the fan (32) is controllable via the control device (56) by means of a second temperature sensor (82) arranged in the cooking chamber (14).

9. Process for the heat treatment of foods in a treatment chamber (15), which can be heated by introduction of steam into the treatment chamber (15), the supply of steam being controlled by means of a control device (56) as a function of the measurement signal of a temperature sensor (72), the fluid present in the treatment chamber (15) being circulated by a fan (32), condensate arising in the treatment chamber (15) being discharged via a condensate discharge line (24) and the temperature sensor (72), to control the supply of steam, being provided in a sensor pipe (74), the first end (41) of which is connected to the condensate discharge line (24), characterized in that a second end of the sensor pipe (74) is arranged in the region of an intake (33) of the fan (32) on the suction side thereof (34) in such a way that a fluid flow from the condensate discharge line (24) towards the treatment chamber (15) is generated in the sensor pipe (74).

10. Process according to Claim 9, characterized in that the supply of steam into the treatment chamber (15) is controlled in such a way that an excess amount of steam is introduced into the treatment chamber (15) so that steam discharges from the treatment chamber (15) via the condensate discharge line (24), which steam is extensively condensed by a downstream heat exchanger (80).

## Revendications

1. Dispositif de traitement à chaud d'aliments comportant une chambre de traitement (15), un générateur de vapeur (48), dont la conduite de vapeur (54) est reliée par une vanne de vapeur (52) à la chambre de traitement (15) en vue de son chauffage, une soufflerie (32) pour faire circuler le fluide dans la chambre de traitement (15), un dispositif de commande (56) pour commander l'alimentation de vapeur vers la chambre de traitement (15) par l'intermédiaire d'un premier capteur de température (72), et une sortie basse (22) qui est reliée à une conduite d'évacuation de condensat (24), le premier capteur de température (72) pour commander l'alimentation de vapeur étant prévu dans un tube de détection (74), dont la première extrémité (41) est reliée à la conduite d'évacuation de condensat (24), caractérisé en ce que la deuxième extrémité du tube de détection (74) débouche au niveau d'un embout d'aspiration (33) de la soufflerie (32) sur son côté aspiration (34), et en ce que la première extrémité (41) du tube de détection (74) est agencée de telle sorte que, dans le tube de détection (74), apparaisse une chute de pression entre la conduite d'évacuation de condensat (24) et l'embout d'aspiration (33) de la soufflerie (32).

2. Dispositif selon la revendication 1, caractérisé en ce que la chambre de traitement (15) est séparée par une cloison (78), avec formation d'au moins un passage (26, 28), en une chambre de cuisson (14) et une chambre de chauffage (16), qui peut être reliée à la conduite de vapeur (54), et en ce que le côté aspiration (34) de la soufflerie (32) débouche dans la chambre de cuisson (14) et le côté pression (35) de la soufflerie (32) débouche dans la chambre de chauffage (16).

3. Dispositif selon l'une ou plusieurs des revendications précédentes, caractérisé en ce que la conduite de pression (54) débouche dans la chambre de traitement (15) par l'intermédiaire d'une vanne de vapeur (52), qui est coupée au dispositif de commande (56) pour réguler l'alimentation en vapeur.

4. Dispositif selon l'une ou plusieurs des revendications précédentes, caractérisé en ce que la conduite d'évacuation de condensat (24) passe à travers un échangeur de chaleur (80), qui est relié côté entrée à une conduite d'eau fraîche (70) et côté sortie au générateur de vapeur (48).

5. Dispositif selon la revendication 4, caractérisé en ce que, pour réguler l'apport d'eau fraîche dans le générateur de vapeur (48), une vanne (66) est prévue dans la conduite d'eau fraîche (70).

6. Dispositif selon l'une ou plusieurs des revendications précédentes, caractérisé en ce que le générateur de vapeur (48) présente un dispositif de chauffage (50) commandé par le biais du premier capteur de température (72).

7. Dispositif selon l'une ou plusieurs des revendications précédentes, caractérisé en ce qu'il est prévu dans la chambre de chauffage (16) un dispositif de chauffage (30) qui peut être commandé par l'intermédiaire du premier capteur de température (72) ou par l'intermédiaire d'un deuxième capteur de température (82) placé dans la chambre de cuisson.

8. Dispositif selon l'une ou plusieurs des revendications 2 à 7, caractérisé en ce que la soufflerie (32) peut être commandée par le biais du dispositif de commande (56) au moyen d'un deuxième capteur de température (82) placé dans la chambre de cuisson (14).

9. Procédé de traitement à chaud d'aliments dans une chambre de traitement (15), qui peut être chauffée par introduction de vapeur dans la chambre de traitement (15), l'apport de vapeur étant régulé en fonction du signal de mesure d'un capteur de température (72) au moyen d'un dispositif de commande (56), le fluide présent dans la chambre de traitement (15) étant mis en circulation par une soufflerie (32), le condensat se formant dans la chambre de traitement (15) étant évacué par une conduite d'évacuation de condensat (24), et le capteur de température (72) pour réguler l'alimentation en vapeur étant prévu dans un tube de détection (74) dont la première extrémité (41) est reliée à la conduite d'évacuation de condensat (24), caractérisé en ce qu'une deuxième extrémité du tube de détection (74) est placée au niveau d'un embout d'aspiration (33) de la soufflerie (32) au niveau de son côté aspiration (34), de manière que soit produit dans le tube de détection (74) un écoulement de fluide de la conduite d'évacuation de condensat (24) vers la chambre de traitement (15).

10. Procédé selon la revendication 10, caractérisé en ce que l'alimentation en vapeur dans la chambre de traitement (15) est régulé de telle sorte qu'une quantité de vapeur excédentaire est envoyée dans la chambre de traitement (15), de sorte que de la vapeur sort de la chambre de traitement (15) par la conduite d'évacuation de condensat (24) et se condense en grande partie à travers un échangeur de chaleur (80) placé après.
